# EUROPEAN PATENT SPECIFICATION

(11) **EP 3 808 629 B1**
(45) Date of publication and mention of the grant of the patent: **27.04.2022**
(21) Application number: 19211686.1
(22) Date of filing: 27.11.2019
(51) Int. Cl.: B61H 5/00, F16D 65/12

(54) **BRAKING MODULE HAVING INTEGRATED COMBINING UNIT**
BREMSMODUL MIT INTEGRIERTER KOMBINIEREINHEIT
MODULE DE FREINAGE AYANT UNE UNITÉ DE COMBINAISON INTÉGRÉE

(30) Priority: 16.10.2019 KR 20190128350
(43) Date of publication of application: 21.04.2021
(73) Proprietor: Korea Railroad Research Institute, Uiwang-si, Gyeonggi-do 16105 (KR)
(72) Inventor: KIM, Minsoo, Gyeonggi-do 15886 (KR); LEE, Hanson, Seoul 08634 (KR); KIM, Jaechul, Seoul 05105 (KR)
(74) Representative: Gaunt, Thomas Derrick

(56) References cited:
- WO-A1-02/25135
- WO-A1-2019/190086
- DE-A1- 19 527 173
- DE-B3-102012 110 454
- JP-A- H10 129 480
- JP-A- H10 129 481
- JP-U- S55 153 268

## Description

### BACKGROUND

### 1. Field of Disclosure

The present disclosure of invention relates to a braking module for a railway vehicle, and more specifically the present disclosure of invention relates to a braking module for a railway vehicle having an integrated combining unit. The braking module includes a disk and a hub which are combined with a vehicle axis and are rotated to decrease a velocity of the railway vehicle.

### 2. Description of Related Technology

Recently, as a braking module for a railway vehicle, combination technology between a disk and a hub has been developed variously.

Conventionally, a combining unit such as a bolt, a nut and so on is used for combining the hub with the disk without using any additional elastic member, but a force applied to the braking module is directly transferred to the combining unit, so that the combining unit is easily damaged or released.

Thus, as disclosed in PCT laid-open patent number WO2002-025135, a gap maintaining spring is disposed between the bolt and the nut, with combining the hub with the disk, and thus the tension of the spring may maintain the combining between the bolt and the nut.

In addition, as disclosed in Japanese laid-open patent number JP2007-269282, the gap maintaining spring is disposed between additional fixing frames and the bolt, the spring and the nut are combined with each other, and thus the tension of the spring may be more increased due to the additional fixing frames.

However, the prior arts developed until now, the spring is added to the combining between the bolt and the nut, and thus a vertical combining force may be increased. However, a circumferential combining force may not be increased due to a lack of degrees of freedom along a circumferential direction of the disk.

### SUMMARY

The present invention is developed to solve the above-mentioned problems of the related arts. The present invention provides a braking module for a railway vehicle, having a disk capable of being freely contracted or expanded along a circumferential direction of the disk and having an elasticity along an axis direction which is a right and left direction of the railway vehicle.

According to an example embodiment, a braking module includes a disk, a hub, an elastic unit and a combining unit. The disk includes a disk body and a plurality of fixing units. The disk body has an opening portion formed at a center of the disk. The fixing units protrudes from an inner surface of the disk body toward the opening. The hub includes a central frame, an upper surface portion and a plurality of combining blocks. The central frame has a central hole. The upper surface portion is formed at an end of the central frame. The combining blocks are formed on the upper surface portion and are inserted between the fixing units. The elastic unit is integrally formed, and disposed on the fixing units or beneath the upper surface portion. The combining unit fixes the fixing units, the upper surface portion and the elastic unit with each other.

In an example, the fixing units may be arranged with a constant distance, along the inner surface of the disk body.

In an example, each of the fixing units may have a fixing hole into which the combining unit is inserted.

In an example, the combining blocks may be arranged with a constant distance along the upper surface portion, to be inserted between the fixing units.

In an example, a plurality of combining grooves may be respectively formed at spacing portions between the combining blocks.

In an example, each of the combining grooves may have a U shape, to be open toward an outer side of the upper surface portion.

In an example, the combining unit may pass through the combining grooves.

In an example, the elastic unit may be disposed on the fixing units and combining blocks which are alternatively disposed.

In an example, the elastic unit may include a contact portion, an elastic portion and an extending portion. The contact portion may be fixed on the fixing unit, and have an insert hole at a center of the contact portion. The combining unit may pass through the insert hole. The elastic portion may extend from both sides of the contact portion, and be spaced apart from both of the fixing unit and the combining block. The extending portion may connect the elastic portions adjacent to each other, and be disposed on the combining block.

In an example, the elastic unit may be disposed beneath the upper surface portion.

In an example, the elastic unit may include an elastic portion, a contact portion and an extending portion. The elastic portion may be spaced apart from a bottom surface of the upper surface portion, and have an insert hole at a center of the elastic portion. The combining unit may pass through the insert hole. The contact portion may make contact with the bottom surface of the upper surface portion. The extending portion may connect the elastic portion with the contact portion, and be spaced apart from the bottom surface of the upper surface portion.

In an example, the elastic unit may include an upper elastic unit and a lower elastic unit. The upper elastic unit may be disposed on the fixing units and the combining blocks which are alternatively disposed. The lower elastic unit may be disposed beneath the upper surface portion.

In an example, each of the upper elastic unit and the lower elastic unit may include an elastic portion, a contact portion and an extending portion. The elastic portion may be spaced apart from a bottom surface of the upper surface portion or the fixing units, and have an insert hole at a center of the elastic portion. The combining unit may pass through the insert hole. The contact portion may make contact with the bottom surface of the upper surface portion or the combining block. The extending portion may connect the elastic portion with the contact portion, and be spaced apart from the bottom surface of the upper surface portion or the fixing units.

According to another example embodiment, the braking module includes a disk, a hub, a fixing plate, a combining unit and an elastic unit. The disk includes a disk body and a plurality of fixing units. The disk body has an opening portion formed at a center of the disk. The fixing units protrudes from an inner surface of the disk body toward the opening. The hub includes a central frame, an upper surface portion and a plurality of combining blocks. The central frame has a central hole. The upper surface portion is formed at an end of the central frame. The combining blocks are formed on the upper surface portion and are inserted between the fixing units. The fixing plate is disposed over the fixing units and the combining blocks. The combining unit fixes the disk, the hub and the fixing plate with each other. The elastic unit is disposed in a space between the fixing plate and an upper surface of the combining block, or a space between the upper surface portion and a bottom surface of the combining block.

In an example, the elastic unit may include an upper elastic unit and a lower elastic unit. The upper elastic unit may be disposed in the space between the fixing plate and the upper surface of the combining block. The lower elastic unit may be disposed in the space between the upper surface portion and the bottom surface of the combining block. The combining unit may pass through the fixing plate, the fixing unit and the upper surface portion.

According to the present example embodiments, despite of a single elastic unit fixed to a single combining unit, a plurality of combining units are all combined with the elastic unit integrally formed, so that the combining force along a vertical direction may be increased and the supporting force on contraction or expansion along a circumferential direction of the disk and the hub. Thus, the stress or the stain applied to the disk and the hub may be decreased, to enhance durability and reliability of the braking module.

Due to the integrated elastic module, even though the combining strength is relatively low or the stress is concentrated at a specific portion of the combining unit, the stress may be easily distributed to other portions of the combining unit, so that the combining strength may be entirely increased.

In addition, the fixing units of the disk and the combining blocks of the hub are alternately combined with each other, so that the stain or the stress of the disk and the hub along the circumferential direction may be decreased more.

In addition, the combining groove having a U shape is formed at the upper surface portion of the hub, and thus a contact area with an outside is more increased to minimize heat dissipation toward the circumferential direction, and to minimize the effect of thermal strain at a specific portion toward the disk.

In addition, due to the U shape combining groove, the combining unit may have a predetermined displacement toward an outside from a central axis, and thus the stress applied to the disk and the hub may be effectively dismissed or dispersed.

In addition, the disk is not directly combined with the hub, and is combined with the hub via the elastic unit, so that the disk may be expanded more freely along the circumferential direction and the stress due to the heat expansion of the disk may be less transferred.

In addition, according to the example embodiments, the elastic unit may be selective disposed over the fixing unit or the bottom surface of the upper surface portion of the hub, and thus various kinds of products may be easily manufactured.

In addition, according to the example embodiments, the elastic unit is not combined with the combining unit and the elastic unit is disposed at the space between the combining block and the fixing plate or the space between the combining block and the upper surface portion, so that the impact along the vertical direction or the circumferential direction may be easily absorbed and the combining force is prevented from being decreased due to an effect of the strain of the elastic unit to the combining unit.

### BRIEF DESCRIPTION OF THE DRAWINGS

FIG. 1 is a perspective view illustrating a braking module for a railway vehicle according to an example embodiment of the present invention;
FIG. 2 is an enlarged view of a portion 'A' in FIG. 1;
FIG. 3 is an enlarged perspective view illustrating the braking module in FIG. 1;
FIG. 4 is a perspective view illustrating a disk of FIG. 1;
FIG. 5 is a perspective view illustrating an elastic unit of FIG. 1;
FIG. 6 is a perspective view illustrating a hub of FIG. 1;
FIG. 7A, FIG. 8A, FIG. 9A and FIG. 10A are images showing simulated results for a maximum stress of a front surface of the disk, a maximum stress of a rear surface of the disk, a maximum displacement of the front surface of the disk, and a maximum displacement of the rear surface of the disk, respectively, in the conventional braking module for a railway vehicle;
FIG. 7B, FIG. 8B, FIG. 9B and FIG. 10B are images showing simulated results for the maximum stress of the front surface of the disk, the maximum stress of the rear surface of the disk, the maximum displacement of the front surface of the disk, and the maximum displacement of the rear surface of the disk, respectively, in the braking module in FIG. 1;
FIG. 11 is a cross-sectional view illustrating a braking module for a railway vehicle according to another example embodiment of the present invention;
FIG. 12 is a cross-sectional view illustrating a braking module for a railway vehicle according to still another example embodiment of the present invention; and
FIG. 13 is a cross-sectional view illustrating a braking module for a railway vehicle according to still another example embodiment of the present invention.

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The invention is described more fully hereinafter with reference to the accompanying drawings, in which embodiments of the invention are shown.

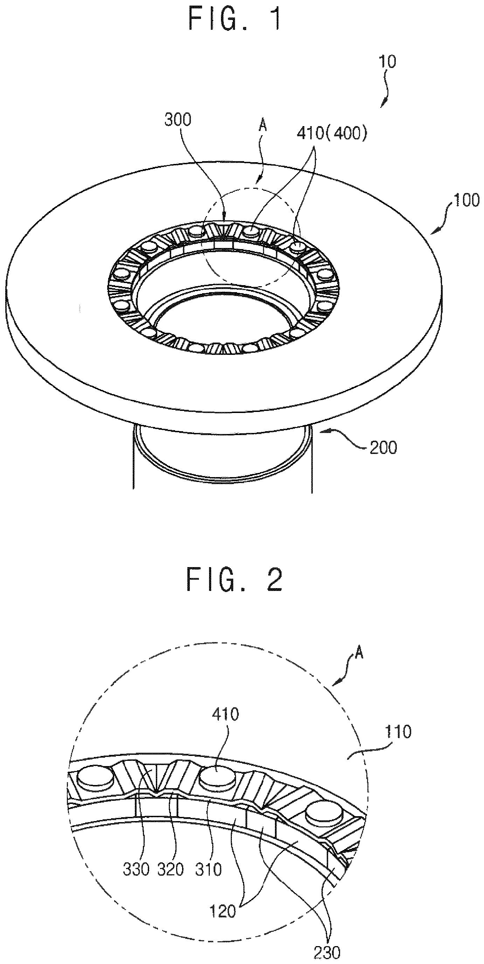

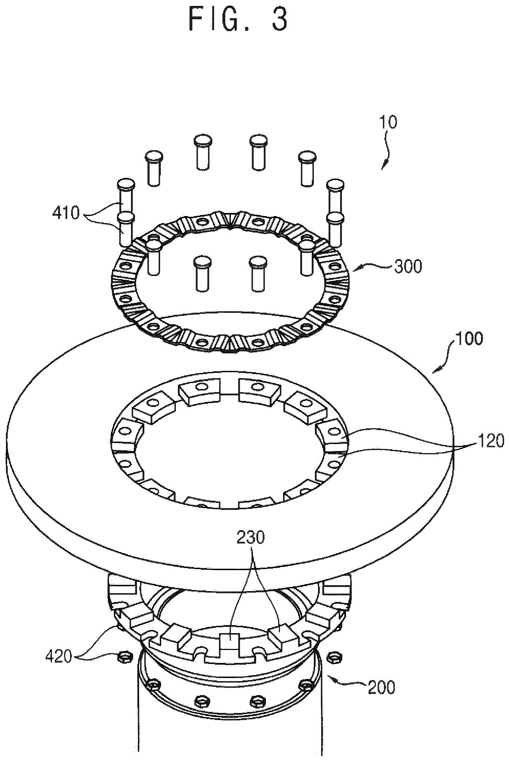

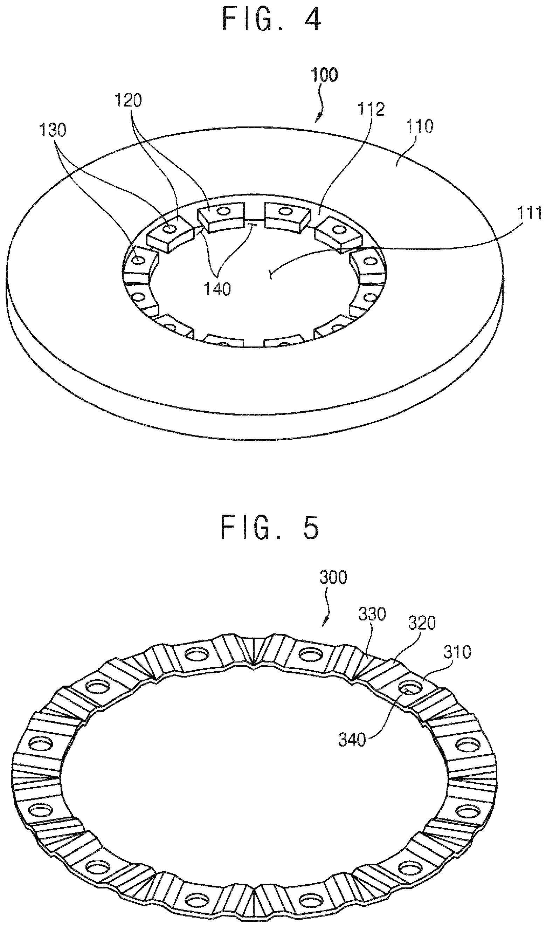

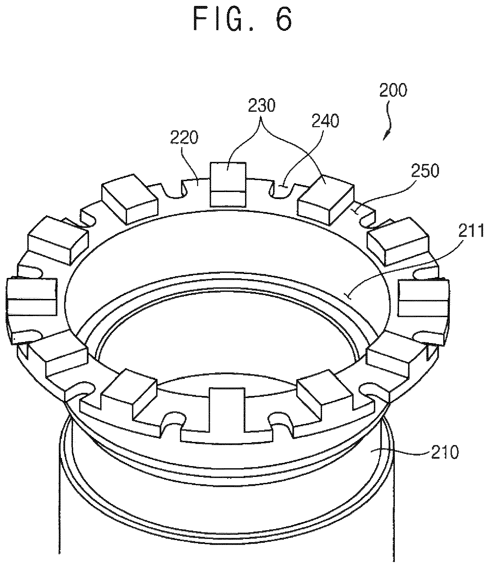

FIG. 1 is a perspective view illustrating a braking module for a railway vehicle according to an example embodiment of the present invention. FIG. 2 is an enlarged view of a portion 'A' in FIG. 1. FIG. 3 is an enlarged perspective view illustrating the braking module in FIG. 1. FIG. 4 is a perspective view illustrating a disk of FIG. 1. FIG. 5 is a perspective view illustrating an elastic unit of FIG. 1. FIG. 6 is a perspective view illustrating a hub of FIG. 1.

Referring to FIGS. 1 to 6, the braking module 10 for the railway vehicle includes a disk 100, a hub 200, an elastic unit 300 and a combining unit 400.

The braking module 10 according to the present example embodiment is explained as used for the railway vehicle, but the braking module 10 may be applied to various kinds of vehicle having the braking module.

The disk 100 includes a disk body 110, and a plurality of fixing units 120. The disk body 110 has a circular shape with an opening 111 formed at a center of the disk body 110. The plurality of fixing units 120 is protruded from the disk body 110.

The disk body 110 has a predetermined thickness. The fixing units 120 are protruded from an inner surface 112 of the disk body 110 toward the center of the opening 111.

The inner surface 112 has a circular shape in a plan view, and thus the fixing units 120 are arranged along a circumferential direction of the inner surface 112. Each of the fixing units 120 is protruded from the inner surface 112 toward the center of the opening portion 111.

Here, each of the fixing units 120 has a thickness less than that of the disk body 110.

In addition, each of the fixing units 120 is spaced apart from the adjacent fixing units 120 by a predetermined distance, and thus a space 140 is formed between the fixing units 120 adjacent to each other.

Here, each of the fixing units 120, when viewed from an upper side (in a plan view), may have a rectangular or trapezoidal shape, so that the space 140 may be the rectangular or trapezoidal shape.

Here, the shape may be variously selected or shaped, but all of the fixing units 120 have substantially same shape, and all of the spaces 140 have substantially same shape.

A fixing hole 130 is formed at a center of each of the fixing units 120, and the combining unit 400 passes through the fixing hole 130.

The hub 200 includes a central frame 210, an upper surface portion 220 and a plurality of combining blocks 230. The central frame 210 has a central hole 211 at a center of the central frame 210, and extends along a direction. The upper surface portion 220 is formed at an end of the central frame 210. The combining blocks 230 are formed on the upper surface portion 220.

The central frame 210 has a circular cross-sectional shape and has a hollow shape. The upper surface portion 220 is an end of the central frame 210, and is formed at a portion combined with the disk 100.

As illustrated in FIG. 6, the upper surface portion 220 has a predetermined area, and extends along a direction substantially perpendicular to the extending direction of the central frame 210.

Thus, the central hole 211 is formed at a center of the upper surface portion 220, and the upper surface portion 200 has a ring shape in a whole.

In addition, the plurality of combining blocks 230 is arranged on the upper surface portion 220 by a predetermined distance.

Here, each of the combining blocks 230 has a rectangular block or a trapezoidal block shape, and all of the combining blocks have substantially same shape.

The shape of each of the combining blocks 230 may be formed, considering the space 140 formed between the fixing units 120.

For example, each of the combining blocks 230 is inserted into the space 140 between the fixing units 120, and thus, as illustrated in FIG. 2, the combining blocks 230 and the fixing units 120 are alternately arranged.

Accordingly, the combining blocks 230 are disposed at the space 140, and the fixing units 120 are disposed at an inserting space 250 which is the space between the combining blocks 230.

Accordingly, the combining blocks 230 and the fixing units 120 are alternately arranged, so that a combining force and a supporting force may be more increased along the circumferential direction which is a direction along the inner surface 112 of the disk 100.

In the present example embodiment, a combining groove 240 is formed at the upper surface portion 220 forming the inserting space 250 in which the combining blocks 230 are not formed.

As illustrated in FIG. 6, the combining groove 240 has a U shape, and an opening portion of the combining groove 240 head for an outward direction of the upper surface portion 220.

In addition, one combining groove 240 is formed at one portion of the upper surface portion 220 where the inserting space 250 is formed, and the combining grooves 240 are respectively formed in a line with the fixing holes 130.

Thus, the combining unit 400 passes through the fixing hole 130 and then passes through the combining groove 240.

Here, the combining groove 240 has the U shape opened to the outward direction, and thus, the combining unit 400 may have a predetermined displacement along the outward direction of the upper surface portion 220 when the combining unit 400 is fixed to the combining groove 240.

The combining unit 400 which is integrally combined with the disk 100 and the elastic unit 300 through the fixing hole 130, has a predetermined displacement along the outward direction, with respect to the hub 200, due to the combining groove 240.

Accordingly, the combining unit 400 may move by the predetermined displacement with respect to the applied stress or force, so that the stress or the force may be absorbed or dispersed more easily.

Further, the U shape combining groove 240 is opened outwardly to increase a contact area with an outside. Thus, as for the hub at which thermal strain may be easily generated since the heat is easily transferred due to the friction, the contact area with the outside is increased, so that the heat dissipation may be increased, the thermal strain of the hub 200 and the disk 100 may be decreased and heat resistance may be increased more.

As illustrated in FIG. 5, the elastic unit 300 is integrally formed with a circular ring shape, and as illustrated in FIG. 1, the elastic unit 300 is disposed over the fixing unit 120.

The elastic unit 300 has the ring shape in a whole, with the same basic unit being repeatedly connected. The basic unit forming the elastic unit 300 includes a contact portion 310, an elastic portion 320 and an extending portion 330.

The contact portion 310 has an insert hole 340 at a center of the contact portion 310, and the combining unit 400 passes through the insert hole 340. A lower surface of the contact portion 310 makes contact with an upper surface of the fixing unit 120.

The combining unit 400 passes through the insert hole 340, and fixes the contact portion 310 with the upper surface of the fixing unit 120.

The elastic portion 340 extends from both ends of the contact portion 310, and has a reverse V shape in a whole. The elastic portion 340 is spaced apart from the upper surface of the fixing unit 120 and the upper surface of the combining block 230.

The extending portion 330 connects the elastic portions 340 adjacent to each other, and is disposed on the combining block 230.

The elastic unit 300 has a circular ring shape in a whole, and has a predetermined width along an axial direction. Thus, an inner radius of the elastic unit 300 is different from an outer radius of the elastic unit 300. Accordingly, when each of the contact portion 310 and the elastic portion 320 extends along the axial direction with the same length, the difference between the inner radius and the outer radius should be compensated. Here, the extending portion 330 compensates the difference between the inner radius and the outer radius.

As illustrated in FIG. 5, in the extending portion 330, an outer length is larger than an inner length, and when viewed in a plane, the extending portion 330 has a triangular shape in a whole, to connect the elastic portions 320 adjacent to each other.

Accordingly, a single basic unit having the contact portion 310, the elastic portion 320 and the extending portion 330 is connected with plural, to form the integrally formed elastic unit 300. Here, the elastic unit 300 has a curved shape, and thus the elastic unit 300 may have elasticity along the vertical direction and the circumferential direction. The stress applied to the braking module 10 along various kinds of direction may be decreased or dispersed effectively.

The combining unit 400 includes a bolt 410 and a nut 420. The bolt 410 passes through the insert hole 340 of the elastic unit 300, the fixing hole 130 of the fixing unit 120 and the combining hole 240 of the upper surface, in series, and then is combined with the nut 420 disposed under the combining hole 240.

Accordingly, using the combining unit 400, the disk 100 and the hub 200 are combined with each other via the integrally formed elastic unit 300.

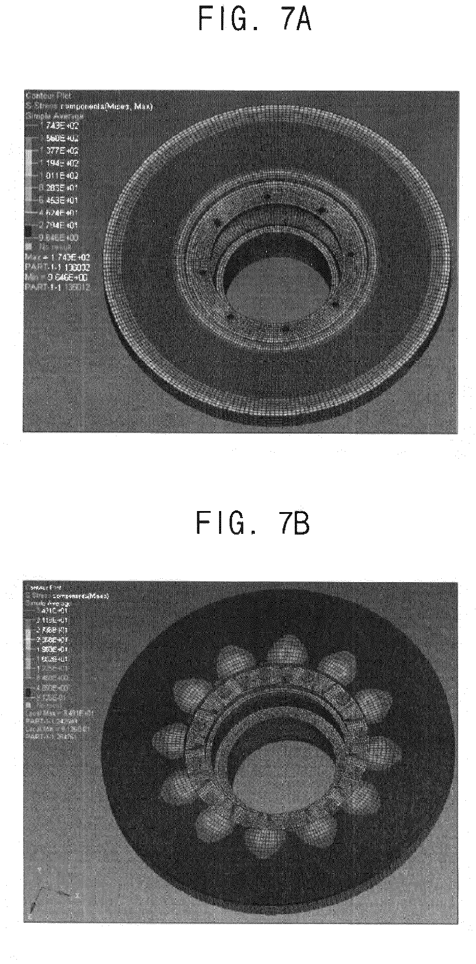

FIG. 7A, FIG. 8A, FIG. 9A and FIG. 10A are images showing simulated results for a maximum stress of a front surface of the disk, a maximum stress of a rear surface of the disk, a maximum displacement of the front surface of the disk, and a maximum displacement of the rear surface of the disk, respectively, in the conventional braking module for a railway vehicle. FIG. 7B, FIG. 8B, FIG. 9B and FIG. 10B are images showing simulated results for the maximum stress of the front surface of the disk, the maximum stress of the rear surface of the disk, the maximum displacement of the front surface of the disk, and the maximum displacement of the rear surface of the disk, respectively, in the braking module in FIG. 1.

Here, in the conventional braking module, as illustrated in the figure, the disk having the fixing part without the fixing units spaced apart from each other, and the hub without the combining block, are directly combined with each other via the combining unit.

In addition, in the above simulation, as for both the conventional braking module and the braking module according to the present example embodiment, a vertical load of 9,500N with 5% deviation value, a shear force with 5% deviation value, and a heat flux with 5% deviation value, are applied as an emergency braking load.

First, referring to FIGS. 7A and 7B, in the conventional braking module, the maximum stress on a front surface of the disk is 174MPa. In contrast, in the braking module according to the present example embodiment, the maximum stress on the front surface of the disk is 35MPa.

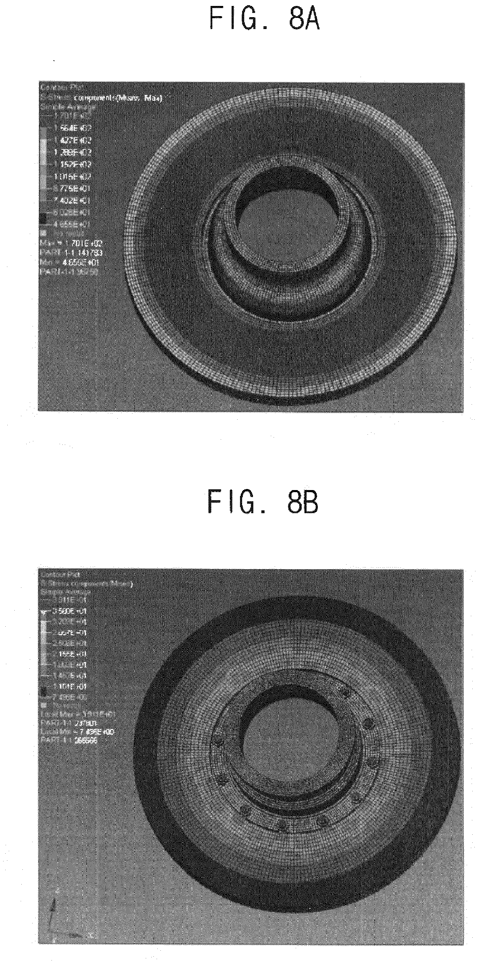

In addition, referring to FIGS. 8A and 8B, in the conventional braking module, the maximum stress on a rear surface of the disk is 170MPa. In contrast, in the braking module according to the present example embodiment, the maximum stress on the rear surface of the disk is 39MPa.

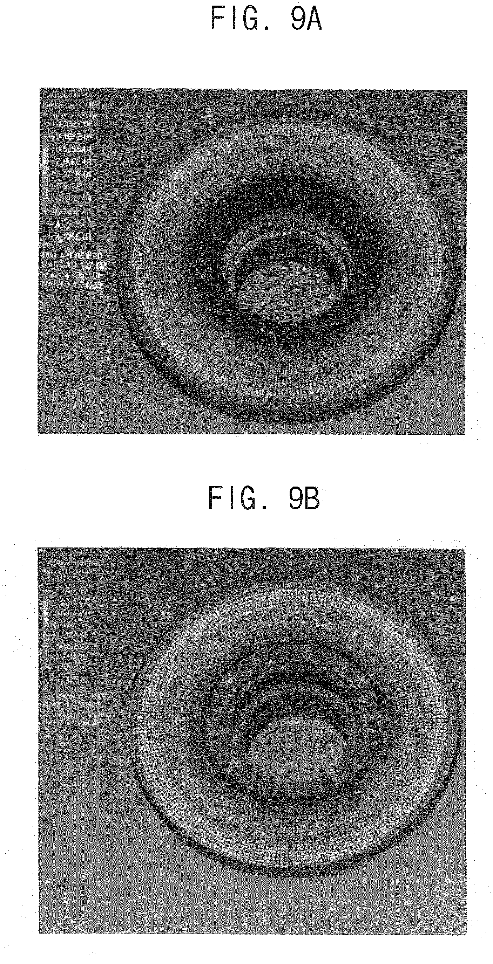

In addition, referring to FIGS. 9A and 9B, in the conventional braking module, the maximum displacement on a front surface of the disk is 0.98mm. In contrast, in the braking module according to the present example embodiment, the maximum displacement on the front surface of the disk is 0.083mm.

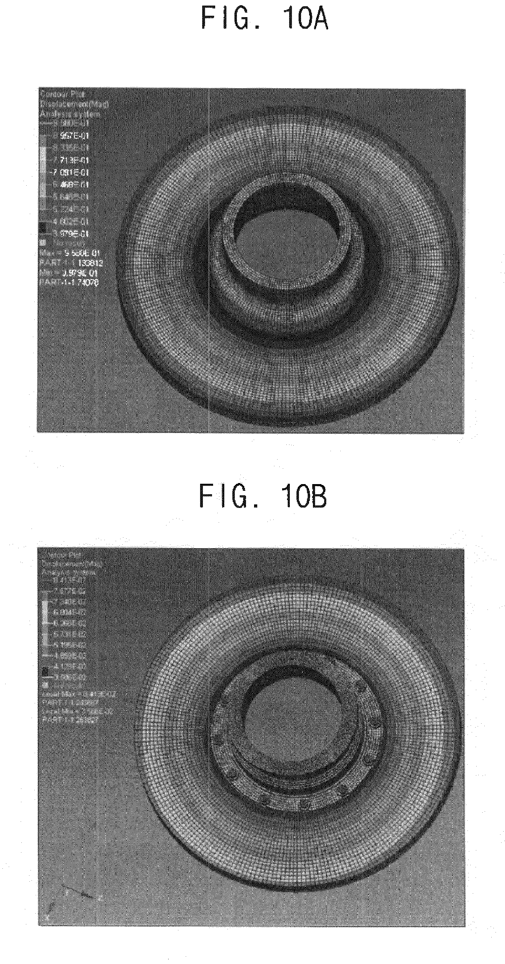

In addition, referring to FIGS. 10A and 10B, in the conventional braking module, the maximum displacement on a rear surface of the disk is 0.96mm. In contrast, in the braking module according to the present example embodiment, the maximum displacement on the rear surface of the disk is 0.084mm.

Further, although not shown in the figure, in the conventional braking module, the maximum temperature on a front surface of the disk is 280°C. In contrast, in the braking module according to the present example embodiment, the maximum temperature on the front surface of the disk is 244°C.

In addition, although not shown in the figure, in the conventional braking module, the maximum temperature on a rear surface of the disk is 267°C. In contrast, in the braking module according to the present example embodiment, the maximum temperature on the rear surface of the disk is 244°C.

The above simulation results are listed in Table 1.

**[Table 1] The simulation results**

| Factors | Conventional braking module | Example braking module |
|---|---|---|
| Stress of front surface | 174 MPa | 35 MPa |
| Stress of rear surface | 170 MPa | 39 MPa |
| Displacement of front surface | 0.98 mm | 0.083 mm |
| Displacement of rear surface | 0.96 mm | 0.084 mm |
| Stress reduction rate | 78% | |
| Temperature of front surface | 280 °C | 244 °C |
| Temperature of rear surface | 267 °C | 244 °C |
| Temperature reduction rate | 10.8% | |

As shown in the Table 1, compared to the conventional braking module, in the braking module according to the present example embodiment, the stress reduction rate is about 78% and the temperature reduction rate is about 10.8%. Thus, the braking module according to the present example embodiment is more efficient in the stress and temperature reduction, compared to the conventional braking module.

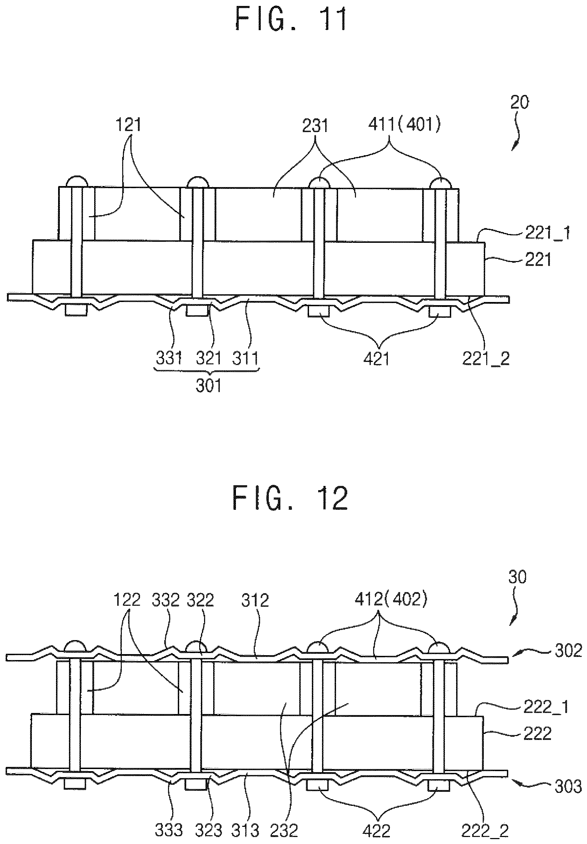

FIG. 11 is a cross-sectional view illustrating a braking module for a railway vehicle according to another example embodiment of the present invention.

The braking module 20 according to the present example embodiment is substantially same as the braking module 10 of FIGS. 1 to 6, except for a disposition and a structure of an elastic unit, and thus same reference numerals are used for same elements and any repetitive explanation will be omitted.

Referring to FIG. 11, in the braking module according the present example embodiment, the elastic unit 301 is disposed beneath a bottom surface 221_2 of an upper surface portion 211 of the hub 200.

Here, the elastic unit 301 includes a contact portion 311, and elastic portion 321 and an extending portion 331. The contact portion 311 makes contact with the bottom surface 221_2 of the upper surface portion 221. An insert hole (not shown) is formed through a center of the elastic portion 321, and the elastic portion 321 is spaced apart from the bottom surface 221_2. The extending portion 331 connects the contact portion 311 with the elastic portion 321, and protrudes toward a lower direction with having a V shape cross-section.

In the elastic unit 301 of the present example embodiment, the contact portion 311, the elastic portion 321 and the extending portion 331 are repeatedly connected with each other, and thus, the elastic unit 301 is integrally formed to have a ring shape as illustrated in FIG. 5.

In the present example embodiment, a bolt 411 of a combining unit 401 is inserted from an upper direction, passes through a fixing unit 121 and the upper surface portion 221, and passes through the insert hole (not shown) of the elastic portion 321, and then is combined with a nut 421 disposed under the elastic portion 321.

In the present example embodiment, as like the elastic unit 300 of FIG. 5, the contact portion 311 makes contact with the bottom surface 221_2 and is combined with the combining unit, and the elastic portion 321 is spaced apart from the bottom surface 221_2.

FIG. 12 is a cross-sectional view illustrating a braking module for a railway vehicle according to still another example embodiment of the present invention.

The braking module 30 according to the present example embodiment is substantially same as the braking module 20 of FIG. 11, except for an upper elastic unit 302, and thus same reference numerals are used for same elements and any repetitive explanation will be omitted.

Referring to FIG. 12, in the braking module 30 of the present example embodiment, a lower elastic unit 303 is substantially same as the elastic unit 301 of the braking module in FIG. 11.

Thus, the disposition of the lower elastic unit 303 is substantially same as that of the elastic unit 301 in FIG. 11. In addition, as the structure, a contact portion 313, an elastic portion 323 and an extending portion 333 of the lower elastic unit 303 are respectively same as the contact portion 311, the elastic portion 321 and the extending portion 331 of the elastic unit 301 in FIG. 11.

The upper elastic unit 302 is disposed over a fixing unit 122 and a combining block 231, and a single basic unit having the contact portion 312, the elastic portion 322 and the extending portion 332 is sequentially connected, and thus the upper elastic unit 302 is integrally formed as a ring shape, as illustrated in FIG. 5.

Here, the upper elastic unit 302 is disposed different, compared to the lower elastic unit 303, but the structure and the shape of the upper elastic unit 302 are substantially same as those of the lower elastic unit 303.

The contact portion 312 makes contact with an upper surface of the combining block 232, an insert hole (not shown) is formed at a center of the elastic portion 322, and the elastic portion 322 is spaced apart from the fixing unit 122.

In addition, the extending portion 332 connects the contact portion 312 with the elastic portion 322, and is protruded along an upper direction with a reverse V shape cross-section.

In the present example embodiment, a bolt 412 of the combining unit 402 is inserted from the upper direction, passes through the insert hole (not shown) of the elastic portion 322 of the upper elastic unit 302, the fixing unit 122 and the upper surface portion 222, and passes through the insert hole (not shown) of the elastic portion 323 of the lower elastic unit 303, and then is combined with the nut 422 disposed under the elastic portion 323.

As like the elastic unit 300 in FIG. 5, in the upper elastic unit 302 or in the lower elastic unit 303, the contact portions 312 and 313 make contact with each of the fixing unit 122 and the bottom surface 222_2, and are combined with the combining unit 402. The elastic portions 322 and 323 are spaced apart from each of the combining block 232 or the bottom surface 222_2.

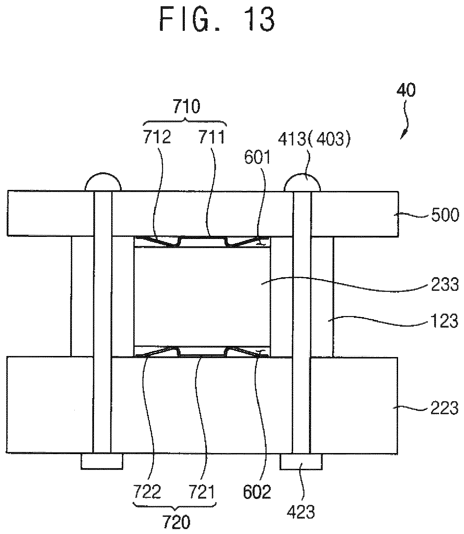

FIG. 13 is a cross-sectional view illustrating a braking module for a railway vehicle according to still another example embodiment of the present invention.

The braking module 40 according to the present example embodiment is substantially same as the braking module 10 of FIGS. 1 to 6, except for a combining block 233, elastic units 710 and 720, and a fixing plate 500, and thus same reference numerals are used for same elements and any repetitive explanation will be omitted.

Referring to FIG. 13, in the braking module 40 according to the present example embodiment, the combining block 233 is spaced apart from an upper surface portion 223 of the hub, to form a lower space 602.

In addition, the fixing plate 500 is additionally disposed on the upper surface of the fixing unit 123 of the disk, and the combining block 233 is spaced apart from the fixing plate 500 to form an upper space 601.

The combining block 233 is disposed between the fixing units 123 disposed adjacent to each other, and both sides of the combining block 233 make contact with sides of the fixing units 123. However, an upper surface and a lower surface of the combining block 233 are respectively spaced apart from a lower surface of the fixing plate 500 and an upper surface of the upper surface portion 223, by a predetermined distance, and thus, the upper space 601 and the lower space 602 are formed.

Here, an upper elastic unit 710 is disposed in the upper space 601, and a lower elastic unit 720 is disposed in the lower space 602.

The upper elastic unit 710 includes a contact portion 711 and an extending portion 712. The contact portion 711makes contact with a lower surface of the fixing plate 500. The extending portion 712 extends from the contact portion 711, and a first end of the extending portion 712 makes contact with an upper surface of the combining block 233 and a second end of the extending portion 712 makes contact with a lower surface of the fixing plate 500.

Here, the contact portion 711 and the extending portion 712 may be disposed oppositely.

Likewise, the lower elastic unit 720 includes a contact portion 721 and an extending portion 722. The contact portion 721 makes contact with an upper surface of the upper surface portion 223. The extending portion 722 extends from the contact portion 721, and a first end of the extending portion 722 makes contact with a lower surface of the combining block 233 and a second end of the extending portion 722 makes contact with an upper surface of the upper surface portion 223.

Here, the contact portion 721 and the extending portion 722 may be disposed oppositely.

The upper elastic unit 710 and the lower elastic unit 720 are disposed independently in separated spaces, and are not connected or contacted with the combining unit 403.

A bolt 413 of the combining unit 403 passes through the fixing plate 500, the fixing unit 123 and the upper surface portion 223 sequentially, and is combined with the nut 423 disposed under the upper surface portion 223.

Accordingly, the upper elastic unit 710 and the lower elastic unit 720 are disposed separately with the combining unit. Thus, the upper and lower elastic units 710 and 720 absorbs the impact of the stress or the strain from various kinds directions, and even though the upper and lower elastic units 710 and 720 are transformed or deformed due to the impact, the transformation or the deformation of the upper and lower elastic units 710 and 720 are not transferred to the combining unit 403 which has a relatively lower hardness. Thus, the stability and the durability of the braking module 40 may be increased.

According to the above example embodiments, despite of a single elastic unit fixed to a single combining unit, a plurality of combining units are all combined with the elastic unit integrally formed, so that the combining force along a vertical direction may be increased and the supporting force on contraction or expansion along a circumferential direction of the disk and the hub. Thus, the stress or the stain applied to the disk and the hub may be decreased, to enhance durability and reliability of the braking module.

Due to the integrated elastic module, even though the combining strength is relatively low or the stress is concentrated at a specific portion of the combining unit, the stress may be easily distributed to other portions of the combining unit, so that the combining strength may be entirely increased.

In addition, the fixing units of the disk and the combining blocks of the hub are alternately combined with each other, so that the stain or the stress of the disk and the hub along the circumferential direction may be decreased more.

In addition, the combining groove having a U shape is formed at the upper surface portion of the hub, and thus a contact area with an outside is more increased to minimize heat dissipation toward the circumferential direction, and to minimize the effect of thermal strain at a specific portion toward the disk.

In addition, due to the U shape combining groove, the combining unit may have a predetermined displacement toward an outside from a central axis, and thus the stress applied to the disk and the hub may be effectively dismissed or dispersed.

In addition, the disk is not directly combined with the hub, and is combined with the hub via the elastic unit, so that the disk may be expanded more freely along the circumferential direction and the stress due to the heat expansion of the disk may be less transferred.

In addition, according to the example embodiments, the elastic unit may be selective disposed over the fixing unit or the bottom surface of the upper surface portion of the hub, and thus various kinds of products may be easily manufactured.

In addition, according to the example embodiments, the elastic unit is not combined with the combining unit and the elastic unit is disposed at the space between the combining block and the fixing plate or the space between the combining block and the upper surface portion, so that the impact along the vertical direction or the circumferential direction may be easily absorbed and the combining force is prevented from being decreased due to an effect of the strain of the elastic unit to the combining unit.

## Claims

1. A braking module (10) for a railway vehicle, comprising:
a disk (100) comprising a disk body (110) and a plurality of fixing units (120), the disk body having an opening portion formed at a center of the disk, the fixing units protruding from an inner surface (112) of the disk body toward the opening (111);
a hub (200) comprising a central frame (210), an upper surface portion (220) and a plurality of combining blocks (230), the central frame having a central hole (210), the upper surface portion being formed at an end of the central frame, the combining blocks being formed on the upper surface portion and being inserted between the fixing units;
**characterised by** an elastic unit (300) integrally formed, and disposed on the fixing units or beneath the upper surface portion; and
a combining unit (400) fixing the fixing units, the upper surface portion and the elastic unit with each other.

2. The braking module of claim 1, wherein the fixing units (120) are arranged with a constant distance, along the inner surface (112) of the disk body.

3. The braking module of claim 2, wherein each of the fixing units (120) has a fixing hole (130) into which the combining unit (400) is inserted.

4. The braking module of claim 2, wherein the combining blocks (230) are arranged with a constant distance along the upper surface portion (220), to be inserted between the fixing units (120).

5. The braking module of claim 4, wherein a plurality of combining grooves (240) are respectively formed at spacing portions between the combining blocks (230).

6. The braking module of claim 5, wherein each of the combining grooves (240) has a U shape, to be open toward an outer side of the upper surface portion (220).

7. The braking module of claim 6, wherein the combining unit (400) passes through the combining grooves (240).

8. The braking module of claim 1, wherein the elastic unit (300) is disposed on the fixing units (120) and combining blocks (230) which are alternatively disposed.

9. The braking module of claim 8, wherein the elastic unit (300) comprises:
a contact portion (310) fixed on the fixing unit, and having an insert hole (340) at a center of the contact portion, the combining unit passing through the insert hole;
an elastic portion (320) extending from both sides of the contact portion, and being spaced apart from both of the fixing units (120) and the combining blocks (230); and
an extending portion (330) connecting the elastic portions adjacent to each other, and being disposed on the combining blocks.

10. The braking module of claim 1, wherein the elastic unit is disposed beneath the upper surface portion (220).

11. The braking module of claim 10, wherein the elastic unit (300) comprises:
an elastic portion (320) spaced apart from a bottom surface of the upper surface portion (220), and having an insert hole at a center of the elastic portion, the combining unit (400) passing through the insert hole;
a contact portion (310) making contact with the bottom surface of the upper surface portion; and
an extending portion (330) connecting the elastic portion with the contact portion, and being spaced apart from the bottom surface of the upper surface portion.

12. The braking module of claim 1, wherein the elastic unit comprises:
an upper elastic unit (302) disposed on the fixing units (120) and the combining blocks (230) which are alternatively disposed; and
a lower elastic unit (303) disposed beneath the upper surface portion (220).

13. The braking module of claim 12, wherein each of the upper elastic unit (302) and the lower elastic unit (303) comprises:
an elastic portion (320) spaced apart from a bottom surface of the upper surface portion (220) or the fixing units (120), and having an insert hole (340) at a center of the elastic portion (320), the combining unit (400) passing through the insert hole;
a contact portion (310) making contact with the bottom surface of the upper surface portion or the combining blocks 230; and
an extending portion (330) connecting the elastic portion with the contact portion, and being spaced apart from the bottom surface of the upper surface portion or the fixing units.

14. The braking module of claim 1, further comprising:
a fixing plate (500) disposed over the fixing units (120) and the combining blocks (230,233);
wherein the combining unit (400) further fixes the disk (100), the hub (200) and the fixing plate (500) with each other; and
wherein the elastic unit (300) is disposed in a space between the fixing plate and an upper surface of the combining blocks (233), or a space between the upper surface portion (220) and a bottom surface of the combining blocks (233).

15. The braking module of claim 14, wherein the elastic unit (300) comprises:
an upper elastic unit (710) disposed in the space between the fixing plate (500) and the upper surface of the combining blocks (233); and
a lower elastic unit (720) disposed in the space between the upper surface portion (220) and the bottom surface of the combining blocks (233),
wherein the combining unit (400) passes through the fixing plate (500), the fixing units (120) and the upper surface portion (220).

## Patentansprüche

1. Ein Bremsmodul (10) für ein Schienenfahrzeug, umfassend:
Eine Scheibe (100) umfassend ein Scheibengehäuse (110) und eine Vielzahl von Befestigungseinheiten (120), das Scheibengehäuse mit einem Öffnungsabschnitt in einem Zentrum der Scheibe, die Befestigungseinheiten ragen aus einer Innenfläche (112) des Scheibengehäuses in die Öffnung (111) hinein;
eine Nabe (200), umfassend einen zentralen Rahmen (210), einen Abschnitt an der oberen Seite (220) und eine Vielzahl von Verbindungsblöcken (230), der zentrale Rahmen mit einem zentralen Hohlraum (210), der Oberseiten-Abschnitt ist an einem Ende des zentralen Rahmens geformt, die Verbindungsblöcke sind an dem Oberseiten-Abschnitt geformt und werden zwischen die Befestigungseinheiten eingefügt;
**gekennzeichnet durch**
eine elastische Einheit (300), die integral geformt ist und an den Befestigungseinheiten oder unter dem Oberseiten-Abschnitt angeordnet ist; und
eine Verbindungseinheit (400), die die Befestigungseinheiten, den Oberseiten-Abschnitt und die elastische Einheit miteinander verbindet.

2. Das Bremsmodul nach Anspruch 1, wobei die Befestigungseinheiten (120) in einem konstanten Abstand entlang der Innenfläche (112) des Scheibengehäuses angeordnet sind.

3. Das Bremsmodul nach Anspruch 2, wobei jede der Befestigungseinheiten (120) eine Befestigungsöffnung (130) hat, in die die Verbindungseinheit (400) eingesetzt wird.

4. Das Bremsmodul nach Anspruch 2, wobei die Verbindungsblöcke (230) in einem konstanten Abstand entlang dem Oberseiten-Abschnitt (220) angeordnet sind und zwischen die Befestigungseinheiten (120) eingesetzt werden.

5. Das Bremsmodul nach Anspruch 4, wobei eine Vielzahl von Verbindungsnuten (240) entsprechend in räumlichen Abständen zwischen den Verbindungsblöcken (230) geformt sind.

6. Das Bremsmodul nach Anspruch 5, wobei jede der Verbindungsnuten (240) eine U-Form hat, die zu einer Außenseite des Oberseiten-Abschnitts (220) geöffnet sind.

7. Das Bremsmodul nach Anspruch 6, wobei die Verbindungseinheit (400) durch die Verbindungsnuten (240) verläuft.

8. Das Bremsmodul nach Anspruch 1, wobei die elastische Einheit (300) an den Befestigungseinheiten (120) angeordnet ist und Blöcke (230) verbindet, die abwechselnd angeordnet sind.

9. Das Bremsmodul nach Anspruch 8, wobei die elastische Einheit (300) Folgendes umfasst:
einen Kontaktabschnitt (310), der an der Befestigungseinheit fixiert ist und eine Einstecköffnung (340) in einem Zentrum des Kontaktabschnitts hat, die Verbindungseinheit verläuft durch die Einstecköffnung;
einen elastischen Abschnitt (320), der sich von beiden Seiten des Kontaktabschnitts erstreckt und räumlich von den Befestigungseinheiten (120) und den Verbindungsblöcken (230) getrennt ist; und
einen Erweiterungsabschnitt (330), der die elastischen nebeneinander liegenden Abschnitte miteinander verbindet und an den Verbindungsblöcken angeordnet ist.

10. Das Bremsmodul nach Anspruch 1, wobei die elastische Einheit unter dem Oberseiten-Abschnitt (220) angeordnet ist.

11. Das Bremsmodul nach Anspruch 10, wobei die elastische Einheit (300) Folgendes umfasst:
einen elastischen Abschnitt (320), der räumlich von einer Unterseite des Oberseiten-Abschnitts (220) getrennt ist und eine Einstecköffnung in einem Zentrum des elastischen Abschnitts hat, die Befestigungseinheit (400) verläuft durch die Einstecköffnung;
einen Kontaktabschnitt (310), der Kontakt zu einer Unterseite des Oberseiten-Abschnitts hat; und
einen Erweiterungsabschnitt (330), der den elastischen Abschnitt mit dem Kontaktabschnitt verbindet und der räumlich von der Unterseite des Oberseiten-Abschnitts getrennt ist.

12. Das Bremsmodul nach Anspruch 1, wobei die elastische Einheit Folgendes umfasst:
Eine elastische Einheit (302), die an den Befestigungseinheiten (120) angeordnet ist,
und Verbindungsblöcke (230), die abwechselnd angeordnet sind; und
eine untere elastische Einheit (303), die unter dem Oberseiten-Abschnitt (220) angeordnet ist.

13. Das Bremsmodul nach Anspruch 12, wobei die obere elastische Einheit (302) und die untere elastische Einheit (303) Folgendes umfassen:
einen elastischen Abschnitt (320), der räumlich von einer Unterseite des Oberseiten-Abschnitts (220) oder den Befestigungseinheiten (120) getrennt ist und eine Einstecköffnung (340) in einem Zentrum des elastischen Abschnitts (320) hat, die Befestigungseinheit (400) verläuft durch die Einstecköffnung;
einen Kontaktabschnitt (310), der Kontakt zu einer Unterseite des Oberseiten-Abschnitts oder den Verbindungsblöcken (230) hat; und
einen Erweiterungsabschnitt (330), der den elastischen Abschnitt mit dem Kontaktabschnitt verbindet und der räumlich von der Unterseite des Oberseiten-Abschnitts oder den Befestigungseinheiten getrennt ist.

14. Das Bremsmodul nach Anspruch 1, ferner umfassend:
Eine Befestigungsplatte (500), die über den Befestigungseinheiten (120) und den Verbindungsblöcken (230,233) angeordnet ist;
wobei die Verbindungseinheit (400) ferner die Scheibe (100), die Nabe (200) und die Befestigungsplatte (500) miteinander verbindet; und
wobei die elastische Einheit (300) in einem Raum zwischen der Befestigungsplatte und einer Oberseite der Verbindungsblöcke (233) angeordnet ist oder in einem Raum zwischen dem Oberseiten-Abschnitt (220) und einer Unterseite der Verbindungsblöcke (233).

15. Das Bremsmodul nach Anspruch 14, wobei die elastische Einheit (300) Folgendes umfasst:
Eine obere elastische Einheit (710), die in dem Raum zwischen der Befestigungsplatte (500) und der Oberseite der Verbindungsblöcke (233) angeordnet ist; und
eine untere elastische Einheit (720), die in dem Raum zwischen dem Oberseiten-Abschnitt (220) und der Unterseite der Verbindungsblöcke (233) angeordnet ist,
wobei die Verbindungseinheit (400) durch die Befestigungsplatte (500), die Befestigungseinheiten (120) und den Oberseiten-Abschnitt (220) verläuft.

## Revendications

1. Module de freinage (10) destiné à un véhicule ferroviaire, comprenant :
un disque (100) comprenant un corps de disque (110) et une pluralité d'unités de fixation (120), le corps de disque présentant une partie d'ouverture formée au centre du disque, les unités de fixation faisant saillie depuis une surface intérieure (112) du corps de disque vers l'ouverture (111) ;
un moyeu (200) comprenant un cadre central (210), une partie de surface supérieure (220) et une pluralité de blocs de combinaison (230), le cadre central présentant un trou central (210), la partie de surface supérieure étant formée à une extrémité du cadre central, les blocs de combinaison étant formés sur la partie de surface supérieure et étant insérés entre les unités de fixation ;
**caractérisé par**
une unité élastique (300) faisant partie intégrante et disposée sur les unités de fixation ou sous la partie de surface supérieure ; et
une unité de combinaison (400) fixant les unités de fixation, la partie de surface supérieure et l'unité élastique les unes aux autres.

2. Module de freinage selon la revendication 1, dans lequel les unités de fixation (120) sont agencées avec une distance constante, le long de la surface intérieure (112) du corps de disque.

3. Module de freinage selon la revendication 2, dans lequel chacune des unités de fixation (120) présente un trou de fixation (130) dans lequel l'unité de combinaison (400) est insérée.

4. Module de freinage selon la revendication 2, dans lequel les blocs de combinaison (230) sont agencés avec une distance constante le long de la partie de surface supérieure (220), pour être insérés entre les unités de fixation (120).

5. Module de freinage selon la revendication 4, dans lequel une pluralité de rainures de combinaison (240) sont formées respectivement au niveau des parties d'espacement entre les blocs de combinaison (230).

6. Module de freinage selon la revendication 5, dans lequel chacune des rainures de combinaison (240) présente une forme en U, pour être ouverte vers un côté extérieur de la partie de surface supérieure (220).

7. Module de freinage selon la revendication 6, dans lequel l'unité de combinaison (400) passe à travers les rainures de combinaison (240).

8. Module de freinage selon la revendication 1, dans lequel l'unité élastique (300) est disposée sur les unités de fixation (120) et les blocs de combinaison (230) qui sont disposés alternativement.

9. Module de freinage selon la revendication 8, dans lequel l'unité élastique (300) comprend :
une partie de contact (310) fixée sur l'unité de fixation et présentant un trou d'insertion (340) au centre de la partie de contact, l'unité de combinaison passant à travers le trou d'insertion ;
une partie élastique (320) s'étendant des deux côtés de la partie de contact et étant espacée à la fois des unités de fixation (120) et des blocs de combinaison (230) ; et
une partie d'extension (330) reliant les parties élastiques adjacentes les unes aux autres et étant disposée sur les blocs de combinaison.

10. Module de freinage selon la revendication 1, dans lequel l'unité élastique est disposée sous la partie de surface supérieure (220).

11. Module de freinage selon la revendication 10, dans lequel l'unité élastique (300) comprend :
une partie élastique (320) espacée d'une surface inférieure de la partie de surface supérieure (220) et présentant un trou d'insertion au centre de la partie élastique, l'unité de combinaison (400) passant à travers le trou d'insertion ;
une partie de contact (310) entrant en contact avec la surface inférieure de la partie de surface supérieure ; et
une partie d'extension (330) reliant la partie élastique à la partie de contact et étant espacée de la surface inférieure de la partie de surface supérieure.

12. Module de freinage selon la revendication 1, dans lequel l'unité élastique comprend :
une unité élastique supérieure (302) disposée sur les unités de fixation (120) et les blocs de combinaison (230) qui sont disposés alternativement ; et
une unité élastique inférieure (303) disposée sous la partie de surface supérieure (220).

13. Module de freinage selon la revendication 12, dans lequel chaque unité parmi l'unité élastique supérieure (302) et l'unité élastique inférieure (303) comprend :
une partie élastique (320) espacée d'une surface inférieure de la partie de surface supérieure (220) et des unités de fixation (120) et présentant un trou d'insertion (340) au centre de la partie élastique (320), l'unité de combinaison (400) passant à travers le trou d'insertion ;
une partie de contact (310) entrant en contact avec la surface inférieure de la partie de surface supérieure des blocs de combinaison (230) ; et
une partie d'extension (330) reliant la partie élastique à la partie de contact et étant espacée de la surface inférieure de la partie de surface supérieure des unités de fixation.

14. Module de freinage selon la revendication 1, comprenant en outre :
une plaque de fixation (500) disposée sur les unités de fixation (120) et les blocs de combinaison (230, 233) ;
dans lequel l'unité de combinaison (400) fixe en outre le disque (100) le moyeu (200) et la plaque de fixation (500) les uns aux autres ; et
dans lequel l'unité élastique (300) est disposée dans un espace entre la plaque de fixation et une surface supérieure des blocs de combinaison (233), ou un espace entre la partie de surface supérieure (220) et une surface inférieure des blocs de combinaison (233).

15. Module de freinage selon la revendication 14, dans lequel l'unité élastique (300) comprend :
une unité élastique supérieure (710) disposée dans l'espace entre la plaque de fixation (500) et la surface supérieure des blocs de combinaison (233) ; et
une unité élastique inférieure (720) disposée dans l'espace entre la partie de surface supérieure (220) et la surface inférieure des blocs de combinaison (233),
dans lequel l'unité de combinaison (400) passe à travers la plaque de fixation (500) les unités de fixation (120) et la partie de surface supérieure (220).
